Europäisches Patentamt

European Patent Office

Office européen des brevets

(11) Numéro de publication: **0 550 101 A1**

## DEMANDE DE BREVET EUROPEEN

(21) Numéro de dépôt: **92204002.7**

(22) Date de dépôt: **18.12.92**

(51) Int. Cl.5: **G06F 15/70**

(30) Priorité: **30.12.91 FR 9116297**

(43) Date de publication de la demande:
**07.07.93 Bulletin 93/27**

(84) Etats contractants désignés:
**DE FR GB**

(71) Demandeur: **LABORATOIRES D'ELECTRONIOUE PHILIPS**
**22, Avenue Descartes**
**F-94450 Limeil-Brévannes(FR)**

(84) **FR**

(71) Demandeur: **N.V. Philips' Gloeilampenfabrieken**
**Groenewoudseweg 1**
**NL-5621 BA Eindhoven(NL)**

(84) **DE GB**

(72) Inventeur: **Lelong, Pierre**
**Société Civile S.P.I.D., 156, Boulevard Haussmann**
**F-75008 Paris(FR)**

(74) Mandataire: **Landousy, Christian**
**Société Civile S.P.I.D. 156, Boulevard Haussmann**
**F-75008 Paris (FR)**

(54) **Procédé de recalage d'images.**

(57) Procédé de recalage d'images prélevées dans une séquence d'images numérisées pour recaler une image ultérieure sur une image de référence précédente, comprenant au moins :
- le sous-échantillonnage de l'image de référence par élimination de ses bords,
- la sélection, sur l'image de référence, sous-échantillonnée, d'une pluralité de zones caractéristiques ayant chacune un centre appelé point de référence,
- et, pour chaque zone caractéristique respectivement, la recherche, dans l'image à recaler, de zones de correspondance ayant un centre appelé point de match,
ce procédé comprenant en outre :
- la détermination des coordonnées des points de match par l'application d'une fonction de similitude sur des zones de recherche de l'image à recaler dont les centres dits prédictifs sont le reflet de points déterminés sur l'image de référence par une prédiction réalisée en extrapolant des points de match associés dans une ou plusieurs images intermédiaires entre ladite image de référence et ladite image à recaler.
Application : caméras de surveillance.

EP 0 550 101 A1

L'invention concerne un procédé de recalage d'images dans une séquence d'images numérisées.

L'invention trouve son application dans le traitement en temps réel de séquences d'images d'objets mobiles, notamment de séquences d'images obtenues au moyen de caméras infra-rouges, pour pouvoir classer ces objets mobiles selon leur vitesse, leur accélération, leur trajectoire, etc. Ainsi l'invention trouve particulièrement son application dans la surveillance du trafic routier.

On rappelle qu'une image est un ensemble de pixels et que chaque pixel a un certain niveau de gris codé sur un certain nombre de bits. Par exemple, si le codage est fait sur 8 bits, les niveaux de gris peuvent prendre toutes les valeurs de 0 à 255. On considérera que la valeur 255 correspond à un pixel brillant, et la valeur 0 à un pixel noir.

On notera en outre que la détection de mouvement dans une séquence d'images implique d'abord une différence entre 2 images consécutives, de manière à faire apparaître les parties fixes et les parties mobiles.

Le recalage d'image est, dans ces conditions, une étape préliminaire fondamentale dans la détection des objets mobiles, car l'opération de recalage permet d'éliminer des images à traiter, les mouvements de l'arrière-plan dus par exemple aux mouvements relatifs de la caméra. En effet, le plus souvent, la caméra qui fait l'acquisition des images n'est pas fixe. Elle est elle-même mobile, soit parce qu'elle est montée sur un véhicule en mouvement, soit parce qu'elle est montée sur un pylône qui oscille dans le vent. Ainsi les images acquises doivent être recalées les unes vis-à-vis des autres de manière à ce que le fond apparaisse fixe dans la séquence d'images en dépit des mouvements de la caméra.

Une autre application du recalage d'images réside dans l'amélioration de la qualité des images qui présentent des effets néfastes de "bougé", dans le cas de prises de vues pour la télévision ou le cinéma par exemple.

Une autre application du recalage d'images réside dans le traitement des images obtenues par l'intermédiaire d'un satellite non géostationnaire par exemple.

De nombreuses autres applications sont possibles dans le traitement des images dans le domaine de la médecine, météorologie, géologie, cartographie, etc.

Un procédé de recalage d'image basée sur la ressemblance entre une première fenêtre extraite d'une image de référence, et une seconde fenêtre extraite d'une image à recaler, est déjà connu de l'état de la technique sous le nom de méthode de "TEMPLATE MATCHING". Cette méthode est décrite dans le livre de W. K. PRATT, intitulé "Digital Image Processing", éditée par J. WILEY and SONS, 1978, Chap.19, p.551-557, "Image Detection and Registration".

Cette méthode se décompose en quatre étapes :

A - Sélection, dans l'image de référence, de "zones caractéristiques", appelées en anglais "TEMPLATES", ayant un centre appelé "point de référence".

B - Recherche, dans l'image à recaler, de "zones de correspondance", qui coïncident avec les "zones caractéristiques", les zones de correspondance ayant un centre appelé "point de match".

C - Estimation de la matrice de transformation géométrique par la méthode des moindres carrés sur les erreurs.

D - Recalage de l'image par l'application de la transformation géométrique inverse.

La méthode de "TEMPLATE MATCHING", telle que décrite dans le document cité, met en oeuvre de nombreux paramètres. Elle présente donc un inconvénient majeur pour les applications citées précédemment, car, de ce fait, elle utilise des algorithmes très consommateurs en temps de calcul, d'où il résulte qu'elle ne peut pas être mise en oeuvre dans une machine travaillant en temps réel.

Notamment, pour parvenir à travailler en temps réel dans les conditions imposées au procédé selon l'invention, la fonction à réaliser dans l'étape A doit être accomplie en un temps inférieur à 40 ns. Il en est de même de la fonction à réaliser dans l'étape B, du fait que ces fonctions sont accomplies à des instants différents.

Un des buts de l'invention est de fournir un procédé pour effectuer l'opération de recalage d'images en une durée de temps très courte, autorisant le traitement d'images successives à la cadence video standard.

Un autre but de l'invention est de fournir un procédé apte à être mise en application au moyen de processeurs standards connus en soi de l'homme du métier, permettant la réalisation d'un dispositif performant et aussi bon marché que possible.

C'est pourquoi dans une de ses formes, l'invention fournit un procédé de recalage d'images prélevées dans une séquence d'images numérisées pour recaler une image ultérieure sur une image de référence précédente, comprenant au moins :

- le sous-échantillonnage de l'image de référence par élimination de ses bords,
- la sélection, sur l'image de référence, sous-échantillonnée, d'une pluralité de zones caractéristiques ayant chacune un centre appelé point de référence,

- et, pour chaque zone caractéristique respectivement, la recherche, dans l'image à recaler, de zones de correspondance ayant un centre appelé point de match, ce procédé comprenant en outre :
- la détermination des coordonnées des points de match par l'application d'une fonction de similitude sur des zones de recherche de l'image à recaler dont les centres dits prédictifs sont le reflet de points déterminés sur l'image de référence par une prédiction réalisée en extrapolant des points de match associés dans une ou plusieurs images intermédiaires entre ladite image de référence et ladite image à recaler.

L'invention concerne également des dispositifs qui mettent en oeuvre cette méthode.

L'invention est décrite ci-après en détail, en référence avec les figures annexées dont :
- la figure 1 qui représente le procédé général de recalage d'image,
- la figure 2 qui représente la configuration des voisins vis-à-vis d'un pixel,
- la figure 3 qui représente les transformations de l'image de référence pour établir la zone de recherche dans l'image de référence,
- les figures 4a et 4b qui représentent la procédure en deux passages, pour obtenir la position des points de match,
- les figures 5a et 5b qui représentent la procédure en un passage, pour obtenir la position des points de match,
- la figure 6 qui représente le positionnement des zones caractéristiques vis-à-vis des zones de recherche correspondantes de l'image à recaler.
- la figure 7 qui représente un diagramme de blocs fonctionnels pour la mise en application du procédé selon l'invention.

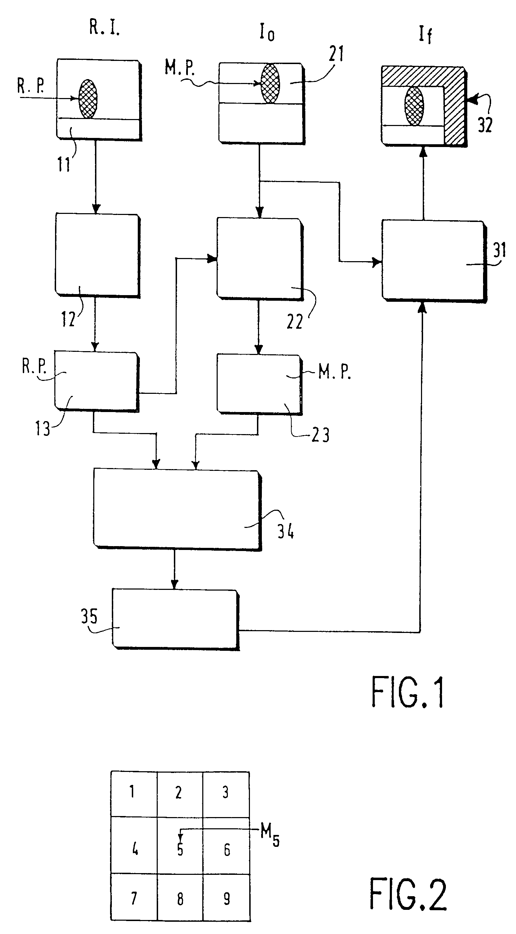

On rappelle que le procédé de "TEMPLATE MATCHING" comprend quatre étapes A, B, C, D, dans lesquelles l'information traitée est la luminance des pixels. La figure 1 représente, de manière fonctionnelle et générale, les différentes étapes utilisées dans ce procédé.

A - Tel que représenté sur la figure 1, on opère, sur l'image de référence R.I. en 11, au moyen de la méthode de détermination 12 des points de référence, la sélection d'un ensemble de "zones caractéristiques" Tmp (TEMPLATES) pour obtenir en 13, les points de référence R.P., centres de ces "zones caractéristiques" Tmp.

B - A partir des points de référence définis en A, on recherche, dans l'image à recaler $I_o$ en 21, au moyen de la méthode de détermination 22 des points de match, des "zones de correspondance", pour obtenir en 23, les points de match M.P., centres de ces "zones de correspondance".

C - Au moyen de la fonction 34, on fait l'estimation de la matrice de transformation géométrique par la méthode des moindres carrés, sur les erreurs.

D - Par la fonction 31, on réalise le recalage de l'image 32 par l'application d'une transformation géométrique inverse 35.

Selon l'invention, chacune de ces étapes est maintenant réalisée d'une façon particulière pour fournir un procédé dans lequel le temps de calcul est suffisamment faible pour permettre sa mise en oeuvre dans une machine fonctionnant en temps réel à la cadence video. Les différents paramètres pour mettre en oeuvre chacune de ces étapes sont définis ci-après en détail.

## A - PREMIERE ETAPE : METHODE DE DETERMINATION DES POINTS DE REFERENCE

Tel que schématisé sur la figure 1, la méthode de détermination 12 des points de référence permet, à partir d'une image de référence R.I, d'obtenir des points de référence R.P. Cette méthode de détermination comprend les opérations suivantes :

### A-1 Calcul d'une fonction de voisinage

On définit d'abord un critère de sélection des "zones caractéristiques" Tmp dans l'image de référence R.I. au moyen d'une fonction de voisinage. Ces zones doivent impérativement présenter des caractéristiques remarquables qui permettront de les retrouver dans l'image à recaler $I_o$. On a choisi ici une fonction de voisinage qui est décrite en référence avec la figure 2.

Sur la figure 2, un pixel $M_5$, de coordonnées x, y a 8 voisins, $M_1$, $M_2$, $M_3$, $M_4$, $M_6$, $M_7$, $M_8$, $M_9$. La fonction de voisinage choisie calcule, pour chaque point, le minimum du gradient de luminance dans les quatre directions représentées sur la figure 2. Ce calcul permet d'obtenir un classement des pixels par leur valeur de luminance. La fonction de voisinage choisie est :

$$I(x,y) \ = \ \text{Inf} \begin{bmatrix} |M_5-M_1| & + & |M_5-M_9| \\ |M_5-M_2| & + & |M_5-M_8| \\ |M_5-M_3| & + & |M_5-M_7| \\ |M_5-M_4| & + & |M_5-M_6| \end{bmatrix}$$

Cette fonction I(x,y) représente le contraste local de l'image. Elle a pour objet de fournir un point $M_5$ qui est non ambigu (on appelle point ambigu un point de référence auquel on peut faire correspondre plusieurs "points de match" dans l'image à recaler).

Le but de toute cette première étape est de définir des points de référence qui sont à au moins une distance minimale les uns des autres pour éviter la concentration.

Afin de réduire le nombre d'opérations, pour l'application au fonctionnement en temps réel, la recherche des points de référence RP s'effectue sur une image de référence sous-échantillonnée SSRI.

L'image de départ est, par exemple, une image de référence RI de dimensions 512 * 512. L'image sous-échantillonnée SSRI pourra être alors de dimensions 128 * 128, en sous-échantillonnant 1 point sur 4. Ce degré de sous-échantillonnage est donné à titre d'exemple. Le niveau de sous-échantillonnage est choisi au mieux en fonction de chaque problème précis.

D'autre part, pour éviter les effets de bord, on réduit encore la région de recherche des points de référence en extrayant une nouvelle zone RSZ de l' image sous-échantillonnée, dite zone de recherche des points de référence, par élimination des bords.

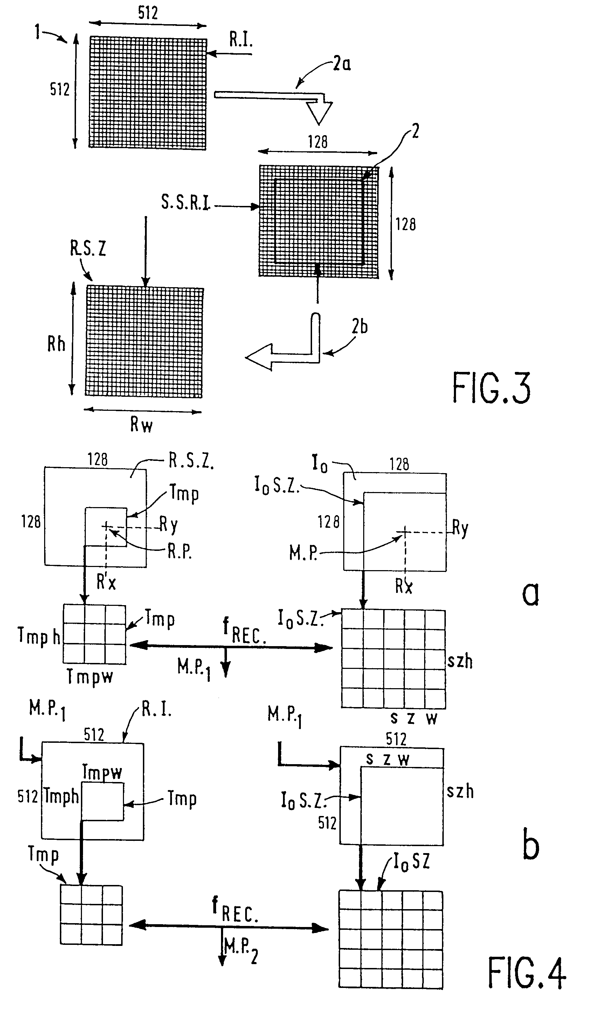

Ces opérations sont illustrées par la figure 3 qui montre schématiquement les différentes transformations de l'image. La partie 1 représente l'image de référence RI de départ de dimensions 512 * 512 dans l'exemple illustré. La partie 2 représente une fenêtre de recherche des points de référence, par exemple 128 * 128, obtenue par la transformation symbolisée par la flèche 2a, représentant l'opération de sous-échantillonnage. Cette fenêtre de recherche des points de référence, ou image sous-échantillonnée S.S.R.I, peut encore être réduite par la transformation symbolisée par la flèche 2b représentant l'extraction de la zone de recherche RSZ des points de référence de dimensions Rh * Rw, obtenue par l'élimination des bords.

**A-2 Opération de masquage**

Après le calcul de la fonction de voisinage, une opération de masquage est réalisée pour éviter la concentration des points de référence en un même endroit de l'image de référence. L'opération de masquage se décompose en deux sous-opérations :

A-2-1 Réalisation d'une opération de chaînage

Par chaînage, on entend une partition de la zone de recherche R.S.Z. préalablement définie, en des classes d'équivalence qui sont des chaînes. Chaque chaîne réunit tous les points de la zone de recherche R.S.Z. ayant même valeur pour la fonction de voisinage. Cet ordre est défini selon une analyse d'image qui est réalisée en commençant par la partie supérieure gauche et en continuant vers la partie inférieure droite de l'image. Ceci est fait ligue après ligue en descendant. Le premier point ayant la valeur est sélectionné, puis en continuant le balayage, les autres points sont sélectionnés jusqu'à ce que l'image ait été totalement balayée, ligne après ligne. Les chaînes sont classées par ordre décroissant de la fonction de voisinage.

A-2-2 Opération de masquage proprement dite

Le masquage est effectué à partir des chaînes au moyen de la méthode suivante :
a) on choisit la valeur maximale de la fonction de voisinage comme premier point de référence,
b) les points de la zone de recherche R.S.Z. se trouvant dans un masque constitué par une petite zone carrée de taille paramétrable, définie autour de ce point de référence, sont retirés des chaînes auxquelles ils appartiennent ;
c) après cette élimination, on sélectionne alors l'élément suivant de la chaîne jusqu'à ce qu'on arrive au bout de la chaîne. Ensuite on examine la chaîne placée juste après, par ordre décroissant ; on choisit alors le maximum restant de la fonction de voisinage comme point de référence ; et on traite les chaînes de l'ordre le plus élevé en allant vers l'ordre le moins élevé, éliminant ainsi les chaînes graduellement ;

d) on poursuit la procédure jusqu'à ce que le nombre de points de référence (ou paramètres) voulu soit obtenu, ou bien tant que le nombre de chaînes n'est pas épuisé ; le nombre de chaînes est épuisé quand le nombre de points de référence demandé est trop grand.

## B - SECONDE ETAPE : METHODE DE RECHERCHE DES POINTS DE MATCH

Cette méthode 22 effectue la recherche, dans une "zone de recherche" rectangulaire et de dimensions paramétrables, des points M.P. de l'image à recaler $I_o$ appelés points de match, qui coïncident le plus avec les points de référence R.P. de l'image de départ R.I.

L'utilisateur définit les paramètres, c'est-à-dire la forme et les dimensions des zones de recherche. Mais la position est déterminée par prédiction ou estimation des MP à partir des points de référence RP transposés.

A cet effet, pour chaque point de référence R.P, on cherche donc un point de match M.P correspondant. Mais cette recherche n'est pas effectuée sur la totalité de l'image à recaler $I_o$. Pour chaque point de référence R.P, on limite la recherche du point de match M.P. à une zone de recherche dans l'image $I_o$, notée $I_o$S.Z, aussi petite possible. On aura évidemment autant de zones de recherche $I_o$S.Z sur l'image à recaler $I_o$ que l'on a de points de référence R.P sur l'image de référence R.I.

Chaque zone de recherche $I_o$S.Z de l'image $I_o$ est définie en prenant une zone autour d'un point qui est prédit à partir du mouvement des images précédentes. En effet, à partir de ce mouvement, on peut estimer des fonctions f(x,y) et g(x,y) où x et y sont les coordonnées du point de référence dans une image donnée. A partir de ces fonctions f et g, on peut prédire la position du point de référence dans l'image suivante et obtenir ses coordonnées X et Y :

$$X = f(x,y)$$
$$Y = g(x,y)$$

Les fonctions f et g peuvent être définies de différentes façons. La façon la plus simple, correspondant à un mouvement nul, est l'identité :

$$x = X$$

et

$$y = Y$$

Une autre façon est l'extrapolation à partir de la connaissance de deux images précédentes. Une autre façon réside dans un filtrage réalisé sur un mouvement à partir d'un nombre d'images plus grand que 2, tel que le filtrage dit de Kalman.

Une fois déterminé par prédiction le centre d'une zone de recherche $I_o$SZ dans $I_o$, on détermine cette zone elle-même ainsi qu'autant de zones $I_o$SZ que de points de référence sur l'image de référence R.I.

Ayant déterminé d'une part, dans l'image de référence réduite à une zone de recherche R.S.Z, les points de référence R.P. centres de zones caractéristiques, et ayant déterminé d'autre part, dans l'image à recaler $I_o$, des petites zones de recherche $I_o$S.Z. autour de points prédits d'après le mouvement des points de référence, on cherche ensuite la position précise des points de match dans ces petites zones de l'image à recaler $I_o$.

Cette recherche est effectuée au moyen d'une fonction de similitude.

Dans une première méthode dite de corrélation, on effectue une mesure de corrélation entre ces fonctions de niveaux de gris, et on évalue l'endroit géographique où la fonction de corrélation est maximale, pour déterminer la localisation exacte du point de match à ce maximum.

Une telle fonction a pour expression :

$$R(m.n) = \frac{\sum\limits_{j=1}^{J} \sum\limits_{k=1}^{K} F1(j,k)\, F2(j-m,k-n)}{\left[\sum\limits_{j=1}^{J} \sum\limits_{k=1}^{K} F_1^2(j,k)\right]^{1/2} \left[\sum\limits_{j=1}^{J} \sum\limits_{k=1}^{K} F_2^2(j-m,k-n)\right]^{1/2}}$$

F1(j,k) et F2(j-m,k-n) représentent respectivement la luminance du pixel (j,k) de l'image de référence R.I. et la luminance du pixel (j-m,k-n) de l'image à recaler $I_o$.

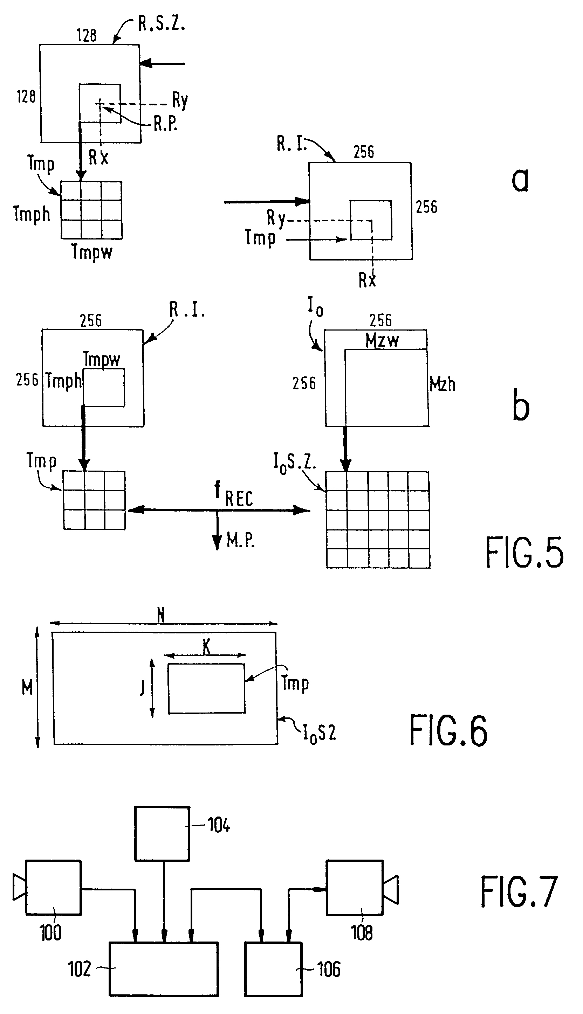

Les indices j et k sont ceux de la "zone caractéristique" Tmp, et m et n sont ceux de la "zone de recherche dans $I_o$", $I_o$S.Z. comme le montre la figure 6.

La fonction de corrélation définie ci-dessus présente une forme assez aplatie. La détermination du maximum est donc délicate. Cet inconvénient peut être réduit en filtrant préalablement l'image au moyen d'un filtre numérique Di(j,k). On obtient alors une nouvelle expression de la fonction de corrélation :

$$Rs(m.n) = \frac{\sum\limits_{j=1}^{J} \sum\limits_{k=1}^{K} G1(j,k)\ G2(j-m,k-n)}{\left[\sum\limits_{j=1}^{J} \sum\limits_{k=1}^{K} G_1^2(j,k)\right]^{1/2} \left[\sum\limits_{j=1}^{J} \sum\limits_{k=1}^{K} G_2^2(j-m,k-n)\right]^{1/2}}$$

dans laquelle :

Gi(j,k) = Fi(j,k) * Di(j,k)

Cette méthode nécessite un nombre important d'opérations dès que les dimensions de la "zone caractéristique" Tmp, et de la "zone de recherche sur $I_o$", $I_o$S.Z, sont grandes. Il est nécessaire d'effectuer (m-j+1) * (n-k+1) mesures de corrélation complètes pour déterminer le maximum de la fonction dans la "zone de recherche dans $I_o$", aucune décision ne pouvant être prise tant que l'on ne connaît pas le maximum R(m,n) pour tous les m,n.

En contrepartie, cette méthode possède des avantages indéniables qui sont la robustesse et la possibilité de traiter des images de niveaux de luminance différents.

Une seconde méthode permet de réduire le nombre d'opérations.

Elle est associé à la fonction suivante :

$$Es = \sum\limits_{j=1}^{J} \sum\limits_{k=1}^{K} \left| F1(j,k)\ .\ F2(j-m,k-n) \right|$$

où F1(j,k) et F2(j-m,k-n) représentent respectivement la luminance du pixel (j,k) de l'image de référence et de l'image à recaler.

Cette fonction calcule la somme des erreurs accumulées dans une fenêtre. Elle permet de déterminer l'endroit dans la "zone de recherche dans $I_o$", $I_o$S.Z, où la fonction est minimale, ce qui permet d'en déduire la position du "point de match" M.P.

Il est intéressant de noter que le nombre d'opérations pour une fenêtre est relativement peu élevé par rapport à ce qui était nécessaire dans la première méthode. D'autre part, il s'agit de calculer un minimum ; donc au niveau de la programmation, il ne sera plus nécessaire de calculer une double somme complète pour chaque point de la "zone de recherche d'$I_o$", $I_o$S.Z.

Cependant cette deuxième méthode est sensible au bruit lors du calcul de la fonction d'erreur. Cet inconvénient peut être évité par un filtrage de l'image avant le recalage.

## C - MISE EN OEUVRE DU PROCEDE GENERAL PAR LA METHODE DITE DU "TEMPLATE MATCHING"

Deux procédures sont envisageables pour la mise en oeuvre de la méthode générale de "Template matching".

### C-I Procédure dite à double passage

Cette procédure est illustrée par la figure 4. Comme il a été dit plus haut, la recherche des points de référence R.P. s'effectue sur une image sous-échantillonnée amputée de ses bords notée R.S.Z. Le niveau d'échantillonnage étant un paramètre, plusieurs choix sont possibles. En général, on choisit une image 128 * 128.

Une fois les points de référence calculés, ces derniers sont replacés dans l'image de départ R.I. 512 * 512. On calcule les points de match une première fois de manière grossière en extrayant de l'image à récaler $I_o$ des zones de recherche $I_o$S.Z. relativement grandes. Puis on réitère la recherche des points de match dans des zones de recherche dans $I_o$ plus petites, et extraites d'images 512 * 512. De cette manière on obtient des points de match de façon précise.

Ce processus nécessite un double passage de la fonction de similitude choisie et un emplacement mémoire assez important.

La figure 4a illustre les opérations de la première passe du calcul des points de match. La procédure est appliquée à des images sous-échantillonnées 128 * 128. On travaille sur des images de référence et des images à recaler ayant même niveau de sous-échantillonnage.

Dans la première branche de la méthode de détermination, les points de référence R.P. sont calculés sur l'image de référence R.S.Z. 128 * 128 par les quatre modules dans le bloc 12 décrits plus haut :
- procédure calculant la fonction de voisinage pour tous les points de la zone de recherche des points de référence,
- procédure calculant les maxima locaux pour un quadrillage donné de la zone de recherche des points de référence,
- procédure réalisant la partition du tableau des maxima locaux en chaînes de maxima ayant la même valeur pour la fonction de voisinage,
- procédure réalisant l'opération de masquage à partir des chaînes calculées précédemment.

Sur la figure 4a, les coordonnées Rx, Ry sont celles du point de référence RP. Le cadre autour du point RP correspond à la zone caractéristique Tmp de dimensions Tmph * Tmpw. L'extraction de la zone caractéristique Tmp consiste à ne considérer que la partie d'image de dimensions Tmph * Tmpw.

Dans la seconde branche de la méthode de détermination dans le bloc 22, le point Rx, Ry est le reflet du point de référence R.P, considéré dans l'image à recaler $I_o$ de même niveau de sous-échantillonnage que R.I. Le cadre autour de ce point est la zone de recherche $I_o$S.Z. La taille de la zone de recherche est donnée par SZw * SZh.

On explore, dans le bloc 22, la zone de recherche $I_o$S.Z. et on recherche la position sur laquelle on peut superposer de la façon la plus exacte possible la zone caractéristique extraite de l'image de référence.

L'utilisation de la fonction de similitude discutée plus haut permet de déterminer la position optimale de la zone caractéristique. Puis, la zone de recherche $I_o$S.Z. est bloquée. A chaque position essayée sur la zone de recherche $I_o$S.Z, correspond une mesure. En définitive, on adopte la position qui correspond à la meilleure mesure. La position ainsi obtenue fournit les coordonnées du point de match.

Dans cette première passe dans le bloc 22 on obtient une évaluation grossière des points de match, notée M.P$_1$.

La figure 4b représente la seconde passe de calcul des points de match. Cette passe est effectuée de préférence sur l'image à pleine résolution 512 * 512.

Dans la première branche de la méthode de détermination on répète les opérations décrites pour la première passe, de même dans la seconde branche. Cependant, les zones de recherche $I_o$S.Z. sont maintenant plus petites, et évaluées à partir des points de match M.P$_1$ calculés précédemment de façon grossière. Après l'application de la fonction de similitude $f_{REC}$ dans la deuxième passe, on obtient des points de match précis M.P$_2$.

**C-II Procédure à simple passage**

Cette procédure est illustrée par les figures 5a et 5b. Comme précédemment, la recherche des points de référence s'effectue sur une image sous-échantillonnée R.S.Z. La figure 5a illustre les procédures préliminaires au calcul des points de match. Comme montré sur la figure 5a, les coordonnées Rx, Ry sont celles du point de référence. Le cadre autour du point de référence correspond à la zone caractéristique Tmp de dimensions Tmph * Tmpw.

Les points de référence calculés comme dans la procédure à deux passes, sont ici replacés non pas dans une image à pleine résolution, mais dans une image sous-échantillonnée. On travaille sur une image de référence et une image à recaler ayant même niveau de sous-échantillonnage.

La figure 5b illustre la procédure à une passe qui est alors réalisée, de manière analogue à ce qui a été décrit en référence avec la figure 4a.

La fonction de similitude $f_{REC}$ fournit les coordonnées des points de match M.P.

On dispose alors d'un champ de vecteurs en associant dans le bloc 34 les points de référence avec les points de match correspondants.

## D - ESTIMATION DE LA TRANSFORMATION GEOMETRIOUE

On réalise maintenant une analyse de cohérence de l'ensemble des vecteurs obtenus et on effectue la réjection des vecteurs aberrants.

A partir des vecteurs calculés précédemment, on réalise une approximation de la transformation géométrique au moyen de la méthode détaillée ci-après.

### D-1 Première étape

Dans une première étape, on réalise dans le bloc 34 l'estimation de la transformation géométrique à partir de tous les vecteurs (N au total).

Suivant le type de transformation, le calcul est différent.

**D-1-**1 Transformation géométrique incluant une translation et une rotation.

On exprime analytiquement la transformation géométrique par :

$$\begin{bmatrix} x' \\ y' \end{bmatrix} = \begin{bmatrix} cosa & sina \\ -sina & cosa \end{bmatrix} \begin{bmatrix} x \\ y \end{bmatrix} + \begin{bmatrix} tx + x_o - x_o \ cosa - y_o \ sina \\ ty + y_o + x_o \ sina - y_o \ cosa \end{bmatrix}$$

où $x_o$, $y_o$ est le centre de rotation.

Dans cette formule $tx$ et $ty$ sont les composantes de la translation $t$ appliquée à $x$ et à $y$ : et $a$ est l'angle de rotation.

Pour réaliser le calcul, on utilise la méthode des moindres carrés qui consiste à minimiser l'expression :

$$Er = \sum_{j=1}^{j=N} \| f(\vec{X}_j) - \vec{X}_j \|^2$$

Les suites $Xi = (x_i, y_i)$ et $X_i = f(X_i) = (x_i', y_i')$ représentent respectivement les points de référence et les points de match.

Si l'on prend comme référence le barycentre des points de référence, et pour une faible valeur de $a$ en radians, on obtient après calcul que :

$$a = (\Sigma x_i' y_i - \Sigma y_i' x_i)/(\Sigma x_i' x_i + \Sigma y_i' y_i)$$
$$tx = \Sigma(x_i' - x_i)/N$$
$$ty = \Sigma(y_i' - y_i)/N$$

d'où on déduit la transformation recherchée.

**D-1-**2 Translation

L'estimation est alors une simple moyenne arithmétique des vecteurs calculés à partir des points de référence et de match :

$$\vec{V}_{est} = (1/N) \sum_{j=1}^{N} \vec{V}_j$$

**D-2 Deuxième étape**

La seconde étape consiste à sélectionner les vecteurs. Cette sélection est réalisée dans le bloc 34 par une procédure itérative qui consiste à recalculer à chaque fois la transformation géométrique à partir d'un nombre n de vecteurs réduit :

n < N.

Le critère d'élimination est la mesure du maximum de l'erreur qui est définie par :

$$\left| \vec{V}_{est} - \vec{V}_j \right| \qquad \text{avec } j \in \{1, \ldots, N\}$$

Le vecteur $\vec{V}_j$ correspondant à ce maximum est éliminé.

La procédure est interrompue lorsqu'il ne reste plus qu'un nombre minimum de vecteurs, ou bien lorsque l'erreur passe au-dessous d'une certaine valeur.

Ainsi, la transformation géométrique est modélisée par une fonction à un ou plusieurs degrés de liberté.

L'étape finale 31 de la méthode générale consiste à appliquer la transformation inverse 35 de la transformation géométrique estimée 34, à l 'image à recaler $I_o$, pour obtenir dans le bloc 32 l'image finale recalée $I_f$ comme montré sur la figure 1.

La figure 7 représente un diagramme de blocs fonctionnels d'un dispositif approprié à mettre en application le procédé selon l'invention. Le bloc 100 représente une caméra qui balaye une trame d'image ligne par ligne, et qui enregistre les données des images successives dans la mémoire 102 d'un calculateur.

D'une manière générale, le calculateur 104 accède à la mémoire : tout d'abord, pour sélectionner, dans l'image de référence, des zones caractéristiques et leurs points de référence associés ; puis pour définir, dans une image suivante, des points prédictifs autour desquels les zones de recherche respectives sont centrées ; enfin pour déterminer, à l'intérieur des zones de recherche, des points de match qui correspondent respectivement aux points de référence.

Enfin, une transformation de recalage est calculée. Puis la transformation de recalage est appliquée sur l'image, et est enregistrée dans la mémoire de sortie 106 pour chaque accès par le dispositif d'affichage 108. La transformation de recalage prend en compte le chaînage entre des images successives. En principe, chaque image peut tenir lieu d'image de référence pour une, ou plusieurs, image(s) suivante(s).

Dans une autre application, le dispositif d'affichage 108 est remplacé par un autre calculateur qui calcule les vecteurs de mouvement dans l'image qui ne sont pas conformes au champ de vecteurs de recalage.

En général, ceux-ci représentent des objets en mouvement par rapport à l'ensemble de la scène, et seront par conséquent l'objet de surveillance.

**Revendications**

1. Procédé de recalage d'images prélevées dans une séquence d'images numérisées pour recaler une image ultérieure sur une image de référence précédente, comprenant au moins :
   - le sous-échantillonnage de l'image de référence par élimination de ses bords,
   - la sélection, sur l'image de référence, sous-échantillonnée, d'une pluralité de zones caractéristiques ayant chacune un centre appelé point de référence,
   - et, pour chaque zone caractéristique respectivement, la recherche, dans l'image à recaler, de zones de correspondance ayant un centre appelé point de match, ce procédé comprenant en outre :
   - la détermination des coordonnées des points de match par l'application d'une fonction de similitude sur des zones de recherche de l'image à recaler dont les centres dits prédictifs sont le reflet de points déterminés sur l'image de référence par une prédiction réalisée en extrapolant des points de match associés dans une ou plusieurs images intermédiaires entre ladite image de référence et ladite image à recaler.

2. Procédé selon la revendication 1, caractérisé en ce qu'on applique, sur la zone de recherche de l'image de référence, une fonction de voisinage qui calcule, pour chaque point, le minimum du gradient de luminance dans quatre directions pour fournir un classement des pixels de l'image de référence numérisée, par leur valeur de luminance et par le moyen de ce minimum, et qui sélectionne les points de référence en fonction de ce classement.

3. Procédé selon la revendication 2, caractérisé en ce qu'on sélectionne, parmi les points classés par la fonction de voisinage, seulement ceux qui sont situés à au moins une distance minimale les uns des autres dans l'image de référence, pour éviter l'obtention de points de référence concentrés dans une même région de l'image de référence.

4. Procédé selon la revendication 3, caractérisé en ce que, pour opérer cette sélection, on réalise une partition de la zone de recherche de l'image de référence, dont les classes d'équivalence sont des chaînes qui réunissent chacune tous les points de la zone de recherche de l'image de référence ayant même valeur pour la fonction de voisinage, ces chaînes étant classées par ordre décroissant, et cette sélection se faisant en séquence selon ces classes.

5. Procédé selon la revendication 4, caractérisé en ce qu'on effectue ensuite un masquage à partir des chaînes selon la procédure suivante :
   - sélection de la valeur maximale de la fonction de voisinage comme premier point de référence,
   - exclusion des points de la zone de recherche de l'image de référence se trouvant dans un masque constitué par une petite zone de taille paramétrable définie autour de ce point de référence, des chaînes auxquelles ils appartiennent,
   - sélection de l'élément suivant de la chaîne comme point de référence subséquent, en poursuivant la procédure jusqu'au bout de la chaîne, puis examen des chaînes suivantes par ordre décroissant,
   - poursuite de la procédure jusqu'à l'obtention du nombre voulu de points de référence ou jusqu'à épuisement des chaînes.

6. Procédé selon l'une des revendications 1 à 5, caractérisé en ce que la fonction de similitude est une fonction de corrélation qui établit la ressemblance d'une première fonction représentant la luminance des pixels de l'image de référence et d'une seconde fonction représentant la luminance des pixels de l'image à recaler, en effectuant une mesure de corrélation entre ces fonctions et en évaluant l'endroit géographique où la fonction de corrélation est maximale.

7. Procédé selon l'une des revendications 1 à 5, caractérisé en ce que la fonction de similitude est une fonction qui calcule la somme des valeurs absolues des différences de luminance pixel par pixel entre une zone caractéristique et une zone de même taille de la zone de recherche correspondante dans l'image à recaler, le calcul étant arrêté lorsque l'on arrive à une valeur supérieure à une valeur précédemment obtenue pour un autre point.

8. Procédé selon l'une des revendications 1 à 7, caractérisé en ce que, pour la recherche des zones de correspondance dans l'image à recaler, on recherche la position des points de match par une procédure à double passage de la fonction de similitude, procédure dans laquelle un premier passage est effectué à un niveau de sous-échantillonnage important de l'image de référence et de l'image à recaler, pour obtenir une estimation grossière des points de match dans des zones de recherche de l'image à recaler relativement vastes, et dans laquelle un deuxième passage est effectué à un niveau d'échantillonnage minimal, ou bien à pleine résolution de l'image de référence et de l'image à recaler, pour obtenir la détermination précise des points de match dans des zones de recherche de l'image à recaler relativement petites.

9. Procédé selon l'une des revendications 1 à 7, caractérisé en ce que, pour la recherche des zones de correspondance dans l'image à recaler, on recherche la position des points de match par une procédure à un seul passage de la fonction de similitude, l'image de référence et l'image à recaler étant sous-échantillonnées.

10. Procédé selon l'une des revendications 1 à 9, caractérisé en ce qu'on définit un champ de vecteurs par l'association des points de référence et des points de match correspondants, et en ce qu'on effectue une analyse de cohérence de l'ensemble des vecteurs obtenus avec réjection des vecteurs aberrants pour effectuer une estimation de la transformation géométrique nécessaire au recalage d'image, par une méthode des moindres carrés, sur les erreurs, selon une procédure en deux étapes, la première étape consistant à considérer l'ensemble de tous les vecteurs et la seconde étape consistant à calculer la transformation géométrique de manière itérative à partir d'un petit nombre de vecteurs.

FIG.1

FIG.2

FIG.3

FIG.4

13

FIG.5

FIG.6

FIG.7

14

European Patent Office

**EUROPEAN SEARCH REPORT**

Application Number

EP 92 20 4002

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-9 100 668 (THOMSON-CSF) 10 January 1991 * page 2, line 8 - page 13, line 3 * * page 21 - page 24 * --- | 1,7,8 | G06F15/70 |
| Y | PROCEEDINGS OF THE 12TH INTERNATIONAL GEOSCIENCE AND REMOTE SENSING SYMPOSIUM ;JULY 10-14TH 1989; VANCOUVER, CANADA;IEEE PRESS , NEW YORK (US) pages 1283 - 1286 WILLIAM D. KASTAK ET AL. 'a two-stage algorithm for registration of remotely sensed images' * page 1283, right column, line 11 - page 1284, right column, line 31 * --- | 1,7,8 | |
| A | PROCEEDINGS OF THE ASILOMAR CONFERENCE ON SIGNALS,SYSTEMS AND COMPUTERS , PACIFIC GROVE OCTOBER 30-NOVEMBER 1, 1989 ,CALIFORNIA (US) ;IEEE vol. 2, NEW YORK (US) pages 829 - 833 JOHN C. ELSEY 'a technique for image registration and motion detection' * page 829, right column, line 6 - page 830, right column, line 16; figure 1 * ----- | 1,2,6 | **TECHNICAL FIELDS SEARCHED (Int. Cl.5)** G06F |

The present search report has been drawn up for all claims

| Place of search | Date of completion of the search | Examiner |
|---|---|---|
| THE HAGUE | 05 APRIL 1993 | CHATEAU J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)